# EUROPÄISCHE PATENTANMELDUNG

(11) **EP 4 325 689 A1**
(43) Veröffentlichungstag der Anmeldung: **21.02.2024**
(21) Anmeldenummer: 23183243.7
(22) Anmeldetag: 04.07.2023
(51) Int. Cl.: H02J 7/00, B60L 53/66

(54) **AUFLADEEINRICHTUNG ZUM AUFLADEN EINER AUFLADBAREN BATTERIE**

(30) Priorität: 13.07.2022 DE 102022117483
(71) Anmelder: STILL GmbH, 22113 Hamburg (DE); Linde Material Handling GmbH, 63743 Aschaffenburg (DE)
(72) Erfinder: GÖTZINGER, Jonathan, 63110 Rodgau (DE); WILKEN, Hauke, 22159 Hamburg (DE)
(74) Vertreter: Patentship Patentanwaltgesellschaft

(57) **Zusammenfassung**

Aufladeeinrichtung (120a) zum Aufladen einer aufladbaren Batterie einer elektrisch angetriebenen Vorrichtung (130a) mit einem Batteriemanagementsystem. Die Aufladeeinrichtung (120a) umfasst eine erste Schnittstelle (123), welche ausgebildet ist, auf der Grundlage eines ersten Kommunikationsprotokolls mit einer zentralen Steuereinrichtung (110) zu kommunizieren, und eine zweite Schnittstelle (125), welche ausgebildet ist, mit der aufladbaren Batterie verbunden zu werden, um auf der Grundlage eines zweiten Kommunikationsprotokolls mit dem Batteriemanagementsystem zu kommunizieren und die aufladbare Batterie aufzuladen. Die Aufladeeinrichtung (120a) umfasst ferner eine Prozessoreinrichtung (121), welche ausgebildet ist, ein Gateway-Modul bereitzustellen. Das Gateway-Modul ist ausgebildet, erste Nachrichten von der zentralen Steuereinrichtung (110) gemäß dem ersten Kommunikationsprotokoll an das Batteriemanagementsystem gemäß dem zweiten Kommunikationsprotokoll weiterzuleiten und zweite Nachrichten von dem Batteriemanagementsystem gemäß dem zweiten Kommunikationsprotokoll an die zentrale Steuereinrichtung (110) gemäß dem ersten Kommunikationsprotokoll weiterzuleiten.

## Beschreibung

Die Erfindung betrifft eine Aufladeeinrichtung zum Aufladen einer aufladbaren Batterie einer elektrisch angetriebenen Vorrichtung, insbesondere eines Flurförderzeugs, mit einem Batteriemanagementsystem, ein Verfahren zum Betreiben der Aufladeeinrichtung und ein System umfassend eine Vielzahl der Aufladeeinrichtungen.

Für den Transport und die Lagerung von Produkten, Waren und Materialien werden oftmals Ladungsträger, beispielsweise Gitterboxen oder Paletten, insbesondere Europaletten verwendet. Zur Handhabung derartiger Ladungsträger z.B. in der Intralogistik, d.h. dem innerbetrieblichen Materialfluss, z.B. in einem Warenlager, werden in der Regel teilweise automatisierte Flurförderzeuge, z.B. Gabelstapler, Industrieroboter und dergleichen eingesetzt. Derartige Flurförderzeuge werden häufig durch elektrische Batterien angetrieben, die an Aufladeeinrichtungen (auch als Ladestationen bezeichnet) wieder elektrisch aufgeladen werden müssen. Diese elektrischen Batterien können mit einem Batteriemanagementsystem (BMS) ausgestattet sein, in welchem aktuelle Messwerte und erfasste Historiendaten über eine Kommunikationsschnittstelle einem Flurförderzeug oder einer Aufladeeinrichtung bereitgestellt werden.

Der vorliegenden Erfindung liegt die Aufgabe zugrunde, ein vorteilhaftes Konzept für eine Aufladeeinrichtung und ein System zum Aufladen einer aufladbaren Batterie einer elektrisch angetriebenen Vorrichtung, insbesondere eines Flurförderzeugs, mit einem Batteriemanagementsystem und ein Verfahren zum Betreiben der Aufladeeinrichtung bereitzustellen.

Diese Aufgabe wird durch die Merkmale der unabhängigen Ansprüche gelöst. Vorteilhafte Ausführungsformen der Erfindung sind Gegenstand der abhängigen Ansprüche, der Beschreibung sowie der beiliegenden Figuren.

Gemäß einem ersten Aspekt wird die erfindungsgemäße Aufgabe gelöst durch eine Aufladeeinrichtung zum Aufladen einer aufladbaren Batterie einer elektrisch angetriebenen Vorrichtung, insbesondere eines Flurförderzeugs, mit einem Batteriemanagementsystem. Die Aufladeeinrichtung umfasst eine erste Schnittstelle, welche ausgebildet ist, auf der Grundlage eines ersten Kommunikationsprotokolls mit einer zentralen Steuereinrichtung zu kommunizieren. Die Aufladeeinrichtung umfasst ferner eine zweite Schnittstelle, welche ausgebildet ist, mit der aufladbaren Batterie elektrisch verbunden zu werden, um auf der Grundlage eines zweiten Kommunikationsprotokolls mit dem Batteriemanagementsystem zu kommunizieren und die aufladbare Batterie elektrisch aufzuladen. Die Aufladeeinrichtung umfasst ferner eine Prozessoreinrichtung, welche ausgebildet ist, ein Gateway-Modul bereitzustellen. Das Gateway-Modul ist ausgebildet, erste Nachrichten von der zentralen Steuereinrichtung gemäß dem ersten Kommunikationsprotokoll an das Batteriemanagementsystem gemäß dem zweiten Kommunikationsprotokoll weiterzuleiten und zweite Nachrichten von dem Batteriemanagementsystem gemäß dem zweiten Kommunikationsprotokoll an die zentrale Steuereinrichtung gemäß dem ersten Kommunikationsprotokoll weiterzuleiten.

In einer Ausführungsform ist die elektrisch angetriebene Vorrichtung als ein autonomes Flurförderzeug ausgebildet, insbesondere als ein vollautonomes Flurförderzeug ausgebildet, welches seine Tätigkeit ohne einen Fahrer durchführen kann. Alternativ kann das autonome Flurförderzeug insbesondere als ein teilautonomes Flurförderzeug ausgebildet sein, in welchen zwar weiterhin ein Fahrer vorhanden ist, der Fahrer jedoch nur begrenzt in die Tätigkeiten des Flurförderzeugs eingreift.

In einer Ausführungsform umfasst das autonome, insbesondere vollautonome oder teilautonome, Flurförderzeug einen Automatisierungsgrad von Level 1, Level 2, Level 3, Level 4 und/oder Level 5, wie dies gemäß dem Standard SAE J3016 der SAE International, bzw. der Bundesanstalt für Straßenwesen definiert ist.

In einer Ausführungsform umfassen die ersten Nachrichten Daten und/oder Befehle zum Konfigurieren des Batteriemanagementsystems und/oder zum Durchführen eines Software-Updates des Batteriemanagementsystems.

In einer Ausführungsform umfassen die zweiten Nachrichten Informationen über einen Status der aufladbaren Batterie und/oder einen Status des Batteriemanagementsystems.

In einer Ausführungsform umfasst das erste Kommunikationsprotokoll ein Bus-Kommunikationsprotokoll, insbesondere ein CAN-Bus-Kommunikationsprotokoll, und/oder ein drahtloses Kommunikationsprotokoll.

In einer Ausführungsform umfasst das zweite Kommunikationsprotokoll ein Bus-Kommunikationsprotokoll, insbesondere ein CAN-Bus-Kommunikationsprotokoll.

In einer Ausführungsform ist das Gateway-Modul ferner ausgebildet, dritte Nachrichten von der zentralen Steuereinrichtung gemäß dem ersten Kommunikationsprotokoll an eine elektronische Steuereinheit (auch bezeichnet als Electronic Control Unit, ECU), der elektrisch angetriebenen Vorrichtung gemäß dem zweiten Kommunikationsprotokoll weiterzuleiten und vierte Nachrichten von der elektronische Steuereinheit (bzw. dem ECU) der elektrisch angetriebenen Vorrichtung gemäß dem zweiten Kommunikationsprotokoll an die zentrale Steuereinrichtung gemäß dem ersten Kommunikationsprotokoll weiterzuleiten.

In einer Ausführungsform umfassen die dritten Nachrichten Daten und/oder Befehle zum Konfigurieren der elektronischen Steuereinheit (ECU) der elektrisch angetriebenen Vorrichtung und/oder zum Durchführen eines Software-Updates der elektronischen Steuereinheit (ECU).

In einer Ausführungsform umfassen die vierten Nachrichten Informationen über einen Status der elektronischen Steuereinheit (ECU) der elektrisch angetriebenen Vorrichtung.

Gemäß einem zweiten Aspekt wird die erfindungsgemäße Aufgabe gelöst durch ein Verfahren zum Betreiben einer Aufladeeinrichtung zum Aufladen einer elektrisch aufladbaren Batterie einer elektrisch angetriebenen Vorrichtung, insbesondere eines Flurförderzeugs, mit einem Batteriemanagementsystem. Das Verfahren umfasst die folgenden Schritte: Verbinden einer ersten Schnittstelle der Aufladeeinrichtung mit einer zentralen Steuereinrichtung, um auf der Grundlage eines ersten Kommunikationsprotokolls mit der zentralen Steuereinrichtung zu kommunizieren; Verbinden einer zweiten Schnittstelle der Aufladeeinrichtung mit der aufladbaren Batterie, um auf der Grundlage eines zweiten Kommunikationsprotokolls mit dem Batteriemanagementsystem zu kommunizieren und die aufladbare Batterie elektrisch aufzuladen; und Bereitstellen eines Gateway-Moduls durch eine Prozessoreinrichtung der Aufladeeinrichtung, wobei das Gateway-Modul ausgebildet ist, erste Nachrichten von der zentralen Steuereinrichtung gemäß dem ersten Kommunikationsprotokoll an das Batteriemanagementsystem gemäß dem zweiten Kommunikationsprotokoll weiterzuleiten und zweite Nachrichten von dem Batteriemanagementsystem gemäß dem zweiten Kommunikationsprotokoll an die zentrale Steuereinrichtung gemäß dem ersten Kommunikationsprotokoll weiterzuleiten.

Das Verfahren gemäß dem zweiten Aspekt der Erfindung kann mittels der Aufladeeinrichtung gemäß dem ersten Aspekt der Erfindung durchgeführt werden. Daher ergeben sich weitere möglichen Ausführungsformen des Verfahrens gemäß dem zweiten Aspekt der Erfindung aus den vorstehend und nachstehend beschriebenen weiteren Ausführungsformen der Aufladeeinrichtung gemäß dem ersten Aspekt der Erfindung.

Gemäß einem dritten Aspekt wird die erfindungsgemäße Aufgabe gelöst durch ein System zum Aufladen einer Vielzahl von aufladbaren Batterien einer Vielzahl von elektrisch angetriebenen Vorrichtungen. Das System umfasst eine zentrale Steuereinrichtung; die Vielzahl von elektrisch angetriebenen Vorrichtungen mit der Vielzahl von aufladbaren Batterien; und eine Vielzahl von Aufladeeinrichtungen gemäß dem ersten Aspekt zum Aufladen der Vielzahl von aufladbaren Batterien.

In einer Ausführungsform umfasst die Vielzahl von aufladbaren Batterien eine Vielzahl von aufladbaren Lithiumbatterien.

In einer Ausführungsform umfasst die Vielzahl von elektrisch angetriebenen Vorrichtungen eine Vielzahl von Flurförderzeugen und/oder mobilen Industrierobotern.

In einer Ausführungsform umfasst die Vielzahl von Aufladeeinrichtungen eine oder mehrere stationäre Aufladeeinrichtungen und/oder eine oder mehrere Onboard-Aufladeeinrichtungen.

In einer Ausführungsform sind die Vielzahl von Aufladeeinrichtungen ausgebildet, mit einem Stromnetz verbunden zu werden und mit Wechselstrom und/oder Gleichstrom betrieben zu werden.

In einer Ausführungsform umfasst die zentrale Steuereinrichtung einen Cloud-Server.

Die für den Gegenstand des ersten Aspekts genannten Ausführungsformen sind ebenfalls Ausführungsformen für den Gegenstand des dritten Aspekts.

Die für den Gegenstand des dritten Aspekts genannten Ausführungsformen sind ebenfalls Ausführungsformen für den Gegenstand des ersten Aspekts.

Mit der Erfindung gemäß dem ersten, zweiten und dritten Aspekt sind wesentliche Vorteile verbunden:

Verwendete Protokolle müssen nicht mehrfach implementiert werden, sondern brauchen nur in der zentralen Steuereinrichtung implementiert zu sein. Updates müssen nur für die zentrale Steuereinrichtung durchgeführt werden und nicht für verschiedene Aufladeeinrichtungen, insbesondere unterschiedlicher Typen oder von mehreren Herstellern. Wissen über die im Fahrzeug vorhandenen Signale müssen nicht veröffentlicht oder mit Herstellern von Aufladeeinrichtungen geteilt werden.

Software-Updates des Batteriemanagementsystems (BMS) und/oder der elektronischen Steuereinheit (ECU) der elektrisch angetriebenen Vorrichtung können aufgrund der erfindungsgemäßen Gateway-Funktionalität der Aufladeeinrichtung ohne weitere Anpassungen der Aufladeeinrichtung oder einen in der Aufladeeinrichtung andernfalls notwendigen Pufferspeicher durchgeführt werden.

Weitere Vorteile und Einzelheiten der Erfindung werden beispielhaft anhand der in den schematischen Figuren dargestellten Ausführungsbeispielen näher erläutert. Hierbei zeigt
Figur 1 eine schematische Ansicht eines Systems gemäß einer Ausführungsform zum Aufladen einer Vielzahl von aufladbaren Batterien einer Vielzahl von elektrisch angetriebenen Vorrichtungen;
Figur 2a eine schematische Darstellung von Batteriemanagementsystemen einer Vielzahl von aufladbaren Batterien;
Figur 2b eine schematische Darstellung von weiteren Steuereinrichtungen einer Vielzahl von Vorrichtungen; und
Figur 3 zeigt ein Flussdiagramm, welches Schritte eines Verfahrens zum Betreiben einer Aufladeeinrichtung gemäß einer Ausführungsform zum Aufladen der aufladbaren Batterie einer elektrisch angetriebenen Vorrichtung mit einem Batteriemanagementsystem darstellt.

In der folgenden Beschreibung wird auf die beiliegenden Figuren Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen der vorliegenden Erfindung werden unter Bezugnahme auf die Figuren beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der vorliegenden Erfindung zu vermitteln.

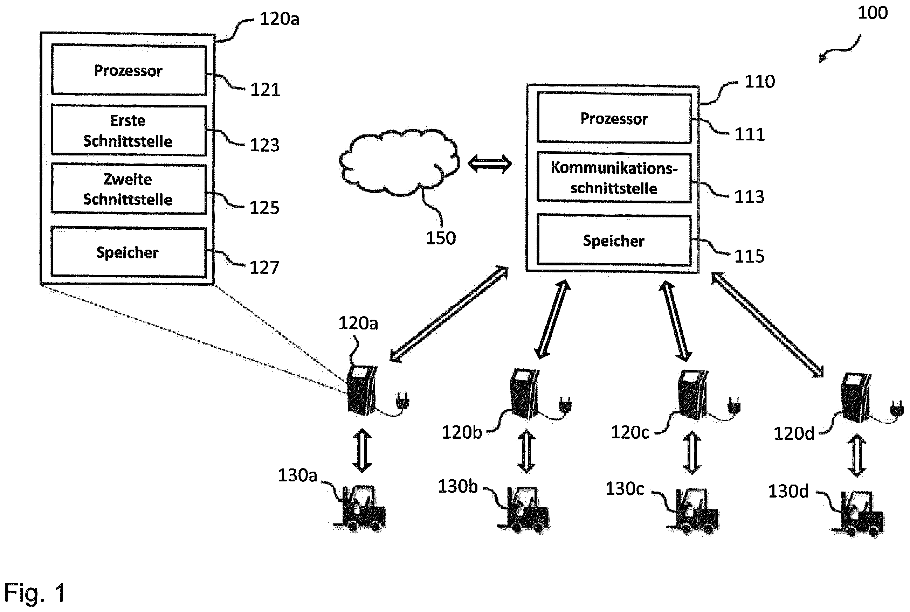

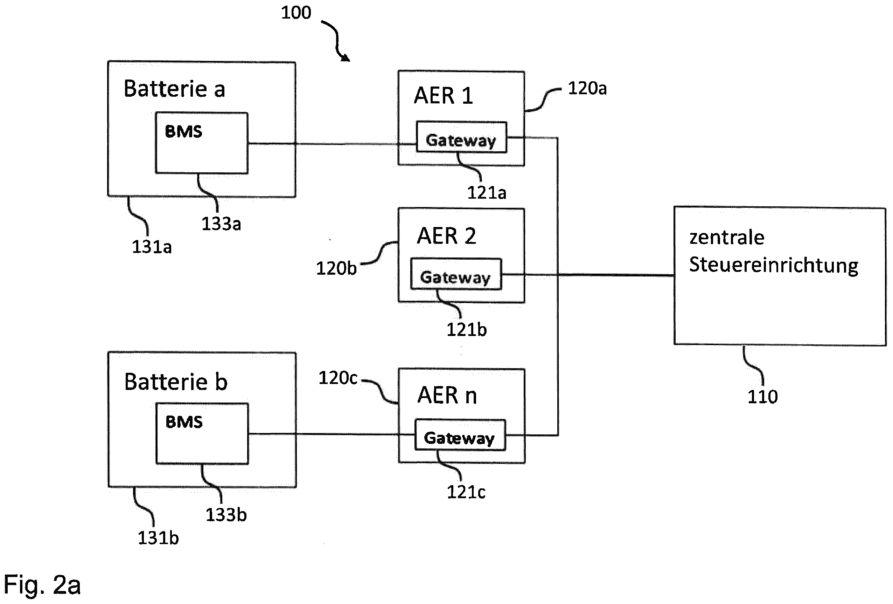

Figur 1 zeigt eine schematische Ansicht eines Systems 100 gemäß einer Ausführungsform zum Aufladen einer Vielzahl von aufladbaren Batterien 131a-b (in der Figur 2a dargestellt) einer Vielzahl von elektrisch angetriebenen Vorrichtungen 130a-d.

Die Vielzahl von aufladbaren Batterien 131a-b kann eine Vielzahl von aufladbaren Lithiumbatterien umfassen. Das System 100 umfasst eine zentrale Steuereinrichtung 110, die Vielzahl von elektrisch angetriebenen Vorrichtungen 130a-d mit der Vielzahl von aufladbaren Batterien 131a-b und eine Vielzahl von Aufladeeinrichtungen 120a-d zum Aufladen der Vielzahl von aufladbaren Batterien 131a-b. Die zentrale Steuereinrichtung 110 kann einen Cloud-Server und insbesondere eine durch den Cloud-Server implementierte Cloudanwendung umfassen. Wie in der Figur 1 dargestellt, kann der Cloud-Server über ein Kommunikationsnetzwerk 150 mit der zentralen Steuereinrichtung 110 verbunden sein.

Die Vielzahl von elektrisch angetriebenen Vorrichtungen 130a-d kann eine Vielzahl von Flurförderzeugen und/oder mobilen Industrierobotern umfassen. Zumindest einige der in der Figur 1 dargestellten elektrisch angetriebenen Vorrichtungen 130a-d 1 können beispielsweise als autonome Flurförderzeuge ausgebildet sein. Dies bedeutet, dass die autonomen Flurförderzeuge insbesondere als vollautonome Flurförderzeuge ausgebildet sind, welche ihre Tätigkeiten ohne einen Fahrer durchführen können. Alternativ können die autonomen Flurförderzeug insbesondere als teilautonome Flurförderzeuge ausgebildet sein, in welchem zwar weiterhin ein Fahrer vorhanden ist, der Fahrer jedoch nur begrenzt in die Tätigkeiten des Flurförderzeugs eingreift.

Die Vielzahl von Aufladeeinrichtungen 120a-d kann eine oder mehrere stationäre Aufladeeinrichtungen und/oder eine oder mehrere Onboard-Aufladeeinrichtungen umfassen. Die Vielzahl von Aufladeeinrichtungen 120a-d können ausgebildet sein, mit einem Stromnetz verbunden zu werden und mit Wechselstrom und/oder Gleichstrom betrieben zu werden.

Auch wenn in der Figur 1 vier Aufladeeinrichtungen 120a-d dargestellt sind, kann das System 100 mehr oder weniger als vier Aufladeeinrichtungen 120a-d umfassen. Im Folgenden wird stellvertretend für die Vielzahl von erfindungsgemäßen Aufladeeinrichtungen 120a-d eine Aufladeeinrichtung 120a der Vielzahl von Aufladeeinrichtungen 120a-d näher beschrieben.

Wie in der Figur 1 dargestellt, umfasst die Aufladeeinrichtung 120a eine Prozessoreinrichtung 121, eine erste Schnittstelle 123 und eine zweite Schnittstelle 125. Wie in der Figur 1 ferner dargestellt, kann die Aufladeeinrichtung 120a ferner einen nichtflüchtigen Speicher 127 umfassen, beispielsweise einen Flash-Speicher. Der nichtflüchtige Speicher 127 ist ausgebildet, Daten und ausführbaren Programmcode zu speichern, der, wenn dieser von der Prozessoreinrichtung 121 der der Aufladeeinrichtung 120a ausgeführt wird, die Prozessoreinrichtung 121 veranlasst, die im Folgenden beschriebenen Funktionen, Operationen und Verfahren durchzuführen.

Ferner kann die zentrale Steuereinrichtung 110 zur Kommunikation mit der Vielzahl von Aufladeeinrichtungen 120a-d eine weitere Kommunikationsschnittstelle 113 und zur Datenverarbeitung eine weitere Prozessoreinrichtung 111 und einen weiteren Speicher 115 mit Programmcode für die weitere Prozessoreinrichtung 111 umfassen.

Die Aufladeeinrichtung 120a ist zum Aufladen einer aufladbaren Batterie 131a einer elektrisch angetriebenen Vorrichtung 130a mit einem Batteriemanagementsystem 133a (in der Figur 2a dargestellt) ausgebildet.

Die erste Schnittstelle 123 der Aufladeeinrichtung 120a ist ausgebildet, auf der Grundlage eines ersten Kommunikationsprotokolls mit der zentralen Steuereinrichtung 110 zu kommunizieren. Das erste Kommunikationsprotokoll kann ein Bus-Kommunikationsprotokoll und/oder ein drahtloses Kommunikationsprotokoll umfassen.

Die zweite Schnittstelle 125 der Aufladeeinrichtung 120a ist ausgebildet, mit der aufladbaren Batterie 131a der elektrisch angetriebenen Vorrichtung 130a verbunden zu werden, um auf der Grundlage eines zweiten Kommunikationsprotokolls mit dem Batteriemanagementsystem 133a zu kommunizieren und die aufladbare Batterie 131a aufzuladen. Das zweite Kommunikationsprotokoll kann ein Bus-Kommunikationsprotokoll umfassen.

Die Prozessoreinrichtung 121 der Aufladeeinrichtung 120a ist ausgebildet ist, ein Gateway-Modul 121a (in der Figur 2a dargestellt) bereitzustellen. Das Gateway-Modul 121a ist ausgebildet, erste Nachrichten von der zentralen Steuereinrichtung 110 gemäß dem ersten Kommunikationsprotokoll an das Batteriemanagementsystem 133a gemäß dem zweiten Kommunikationsprotokoll weiterzuleiten. Die ersten Nachrichten können Daten und/oder Befehle zum Konfigurieren des Batteriemanagementsystems 133a umfassen. Alternativ oder zusätzlich können die ersten Nachrichten Daten und/oder Befehle zum Durchführen eines Software-Updates des Batteriemanagementsystems 133a umfassen.

Das Gateway-Modul 121a ist ferner ausgebildet, zweite Nachrichten von dem Batteriemanagementsystem 133a gemäß dem zweiten Kommunikationsprotokoll an die zentrale Steuereinrichtung 110 gemäß dem ersten Kommunikationsprotokoll weiterzuleiten. Die zweiten Nachrichten können Informationen über einen Status der aufladbaren Batterie 131a und/oder einen Status des Batteriemanagementsystem 133a umfassen.

Figur 2a zeigt eine schematische Darstellung von Batteriemanagementsystemen, BMS, 133a-b der Vielzahl von aufladbaren Batterien 131a-b. Wie in der Figur 2a schematisch dargestellt, kann das System 100 n Aufladeeinrichtungen, AER, 120a-c umfassen, wobei n eine natürliche Zahl größer als null und insbesondere größer als eins ist.

Jede der Aufladeeinrichtungen 120a-c kann ein entsprechendes, zur Figur 1 bereits beschriebenes, Gateway-Modul 121a-c umfassen. Ist an die entsprechende Aufladeeinrichtung 120a-c eine Batterie einer Aufladeeinrichtung 120a-c angeschlossen, beispielsweise über ein Ladekabel zwischen der entsprechenden Aufladeeinrichtung 120a-c und der entsprechenden elektrisch angetriebenen Vorrichtung 130a-d, dann kann wie bereits oben zur Figur 1 beschrieben für eine Nachrichtenverarbeitung durch die zentrale Steuereinrichtung 110 eine Weiterleitung der ersten und zweiten Nachrichten erfolgen.

Durch die Gateway-Module 121a-c können flexibel weitere Daten und/oder Werte in den Datenpfad zwischen den entsprechenden aufladbaren Batterien 131a-b und der zentralen Steuereinrichtung 110 mit aufgenommen werden. Somit können auch weitere Funktionen realisiert werden, da prinzipiell jede Nachricht von der zentralen Steuereinrichtung 110 zum BMS 133a-b der aufladbaren Batterien 131a-b über die entsprechende Aufladeeinrichtung 120a-c weitergeleitet werden kann. Die damit realisierte Gateway Funktion ermöglicht, dass die Funktionalität der Datenerweiterung nicht mehr in jeder Aufladeeinrichtung 120a-c durch ein Update verfügbar gemacht werden muss, sondern nur in der zentralen Steuereinrichtung 110 umgesetzt werden braucht. Die Aufladeeinrichtung 120a-c leiten dann Nachrichten nur noch weiter, ohne die verwendeten Kommunikationsprotokolle umsetzen zu müssen, d.h. den Inhalt der Nachrichten zu verarbeiten.

Beispielsweise, um einen Wert aus einer aufladbaren Batterie 131a-b zu lesen, kann die zentrale Steuereinrichtung 110 ausgebildet sein, die entsprechende Aufladeeinrichtung 120a-c zu konfigurieren, beispielsweise durch eine Änderung des Programmcodes in dem Speicher 127 der entsprechenden Aufladeeinrichtung 120a-c, sodass die dritte Nachricht zum Lesen des Wertes und die antwortende vierte Nachricht aus der aufladbaren Batterie 131a-b bzw. dem entsprechenden Batteriemanagementsystem 133a-b durch das entsprechende Gateway-Modul 121a-c weitergeleitet wird. Anschließend kann die zentrale Steuereinrichtung 110 weitere Nachrichten senden und entsprechende Antworten direkt auswerten.

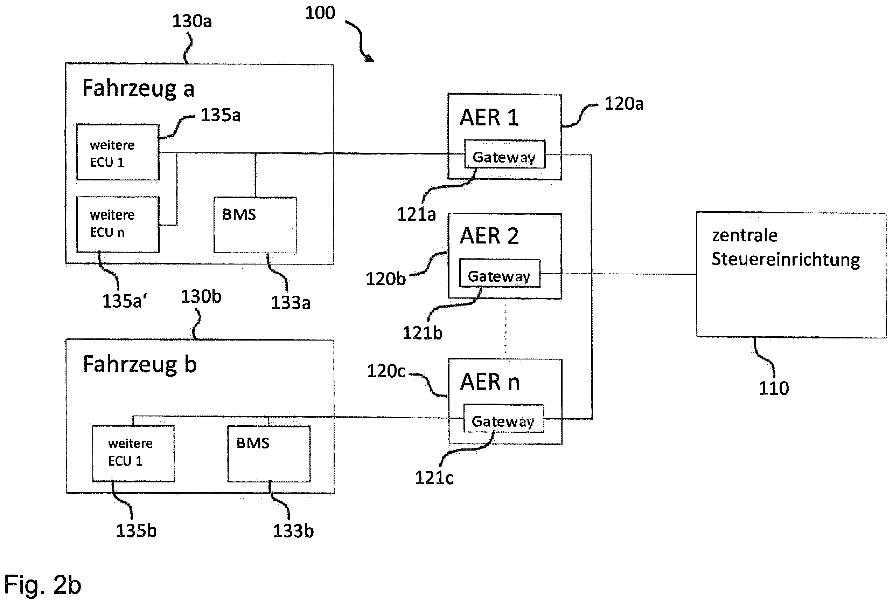

Figur 2b zeigt eine schematische Darstellung von weiteren elektronischen Steuereinheiten, ECU, 135a-b,a' der Vielzahl von elektrisch angetriebenen Vorrichtungen 130a-d. Wie in der Figur 2 durch die elektrisch angetriebenen Vorrichtungen 130a und 130b dargestellt, können die jeweiligen elektrisch angetriebenen Vorrichtungen 130a-d unterschiedlich ausgebildet sein. Beispielsweise kann die elektrisch angetriebene Vorrichtung 130a ein vollautonomes Flurförderzeug sein, welches seine Tätigkeit ohne einen Fahrer durchführen kann. Beispielsweise kann die elektrisch angetriebene Vorrichtung 130b ein teilautonomes Flurförderzeug sein, in welchen zwar weiterhin ein Fahrer vorhanden ist, der Fahrer jedoch nur begrenzt in die Tätigkeiten des Flurförderzeugs eingreift.

Die elektrisch angetriebenen Vorrichtungen 130a-d können ferner eine unterschiedliche Anzahl von weiteren elektronischen Steuereinheiten, ECU, 135a-b,a' umfassen. Beispielsweise kann die elektrisch angetriebene Vorrichtung 130a zur autonomen Funktionalität eine spezifische weitere elektronische Steuereinheit 135a` umfassen.

Das entsprechende Gateway-Modul 121a-c kann ausgebildet sein, dritte Nachrichten von der zentralen Steuereinrichtung 110 gemäß dem ersten Kommunikationsprotokoll an eine elektronische Steuereinheit 135a-b,a' der entsprechenden elektrisch angetriebenen Vorrichtung 130a-d gemäß dem zweiten Kommunikationsprotokoll weiterzuleiten. Die dritten Nachrichten können Daten und/oder Befehle zum Konfigurieren der elektronischen Steuereinheit 135a-b,a' der elektrisch angetriebenen Vorrichtung 130a-d umfassen. Alternativ oder zusätzlich können die dritten Nachrichten Daten und/oder Befehle zum Durchführen eines Software-Updates der elektronischen Steuereinheit 135a-b,a' umfassen. Die weitere elektronische Steuereinheit 135a` kann beispielsweise zur autonomen Navigation ausgebildet sein und über die dritten Nachrichten mit globalen Informationen einer Umgebung der elektrisch angetriebenen Vorrichtung 130a versorgt werden.

Das entsprechende Gateway-Modul 121a-c kann ferner ausgebildet sein, vierte Nachrichten von der elektronische Steuereinheit 135a-b,a' der elektrisch angetriebenen Vorrichtung 130a-d gemäß dem zweiten Kommunikationsprotokoll an die zentrale Steuereinrichtung 110 gemäß dem ersten Kommunikationsprotokoll weiterzuleiten. Die vierten Nachrichten können Informationen über einen Status der elektronischen Steuereinheit 135a-b,a' der elektrisch angetriebenen Vorrichtung 130a-d umfassen. Die weitere elektronische Steuereinheit 135a' kann beispielsweise zur Kartographierung der Umgebung ausgebildet sein und über die vierten Nachrichten die zentrale Steuereinrichtung 110 mit lokalen Informationen der Umgebung der elektrisch angetriebenen Vorrichtung 130a versorgen.

Beispielsweise, um einen Wert aus einer weiteren elektronischen Steuereinheit 135ab,a' einer elektrisch angetriebenen Vorrichtung 130a-b zu lesen, kann die zentrale Steuereinrichtung 110 ausgebildet sein, die entsprechende Aufladeeinrichtung 120a-c zu konfigurieren, beispielsweise durch eine Änderung des Programmcodes in dem Speicher 127 der entsprechenden Aufladeeinrichtung 120a-c, sodass die dritte Nachricht zum Lesen des Wertes und die antwortende vierte Nachricht aus der elektrisch angetriebenen Vorrichtung 130a-b bzw. der entsprechenden weiteren elektronischen Steuereinheit 135a-b,a' durch das entsprechende Gateway-Modul 121a-c weitergeleitet wird. Anschließend kann die zentrale Steuerungseinheit 110 weitere Nachrichten senden und entsprechende Antworten direkt auswerten.

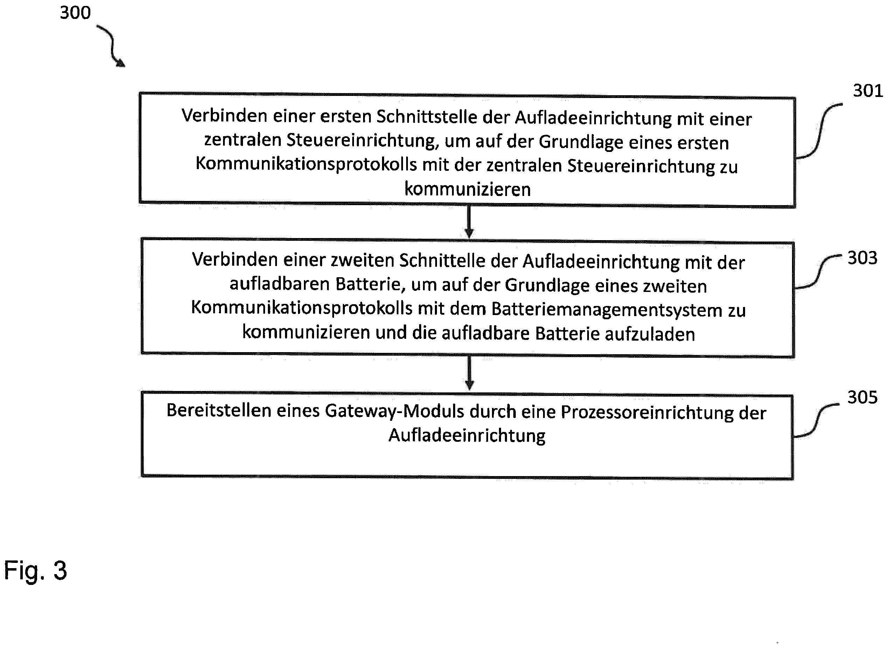

Figur 3 zeigt ein Flussdiagramm, welches Schritte eines Verfahrens 300 zum Betreiben der Aufladeeinrichtung 120a gemäß einer Ausführungsform zum Aufladen der aufladbaren Batterie 131a der elektrisch angetriebenen Vorrichtung 130a mit dem Batteriemanagementsystem 133a darstellt.

Das Verfahren 300 umfasst eine ersten Schritt 301 eines Verbindens der ersten Schnittstelle 123 der Aufladeeinrichtung 120a mit der zentralen Steuereinrichtung 110, um auf der Grundlage des ersten Kommunikationsprotokolls mit der zentralen Steuereinrichtung 110 zu kommunizieren.

Das Verfahren 300 umfasst ferner eine zweiten Schritt 303 eines Verbindens der zweiten Schnittstelle 125 der Aufladeeinrichtung 120a mit der aufladbaren Batterie 131a, um auf der Grundlage des zweiten Kommunikationsprotokolls mit dem Batteriemanagementsystem 133a zu kommunizieren und die aufladbare Batterie 131a aufzuladen.

Das Verfahren 300 umfasst ferner eine dritten Schritt 305 eines Bereitstellens des Gateway-Moduls 121a durch die Prozessoreinrichtung 121 der Aufladeeinrichtung 120a, wobei das Gateway-Modul 121a ausgebildet ist, erste Nachrichten von der zentralen Steuereinrichtung 110 gemäß dem ersten Kommunikationsprotokoll an das Batteriemanagementsystem 133a gemäß dem zweiten Kommunikationsprotokoll weiterzuleiten und zweite Nachrichten von dem Batteriemanagementsystem 133a gemäß dem zweiten Kommunikationsprotokoll an die zentrale Steuereinrichtung 110 gemäß dem ersten Kommunikationsprotokoll weiterzuleiten.

### Bezugszeichenliste

- 100: System
- 110: Zentrale Steuereinrichtung
- 111: Prozessoreinrichtung der zentralen Steuereinrichtung
- 113: Kommunikationsschnittstelle der zentralen Steuereinrichtung
- 115: Speicher der zentralen Steuereinrichtung
- 120a-d: Aufladeeinrichtungen
- 121: Prozessoreinrichtung einer Aufladeeinrichtung
- 121a-c: Gateway-Module der Aufladeeinrichtungen
- 123: Erste Schnittstelle einer Aufladeeinrichtung
- 125: Zweite Schnittstelle einer Aufladeeinrichtung
- 127: Speicher einer Aufladeeinrichtung
- 130a-d: Elektrisch angetriebene Vorrichtungen
- 131a-b: Aufladbare Batterien der elektrisch angetriebenen Vorrichtungen
- 133a-b: Batteriemanagementsysteme der elektrisch angetriebenen Vorrichtungen
- 135a-b,a': Elektronische Steuereinheiten der elektrisch angetriebenen Vorrichtungen
- 150: Kommunikationsnetzwerk
- 300: Verfahren zum Betreiben einer Aufladeeinrichtung
- 301: Erster Verfahrensschritt: Verbinden einer ersten Schnittstelle
- 303: Zweiter Verfahrensschritt: Verbinden einer zweiten Schnittstelle
- 305: Dritter Verfahrensschritt: Bereitstellen eines Gateway-Moduls

## Patentansprüche

1. Aufladeeinrichtung (120a) zum Aufladen einer aufladbaren Batterie (131a) einer elektrisch angetriebenen Vorrichtung (130a) mit einem Batteriemanagementsystem (133a), wobei die Aufladeeinrichtung (120a) umfasst:
eine erste Schnittstelle (123), welche ausgebildet ist, auf der Grundlage eines ersten Kommunikationsprotokolls mit einer zentralen Steuereinrichtung (110) zu kommunizieren;
eine zweite Schnittstelle (125), welche ausgebildet ist, mit der aufladbaren Batterie (131a) verbunden zu werden, um auf der Grundlage eines zweiten Kommunikationsprotokolls mit dem Batteriemanagementsystem (133a) zu kommunizieren und die aufladbare Batterie (131a) aufzuladen; und
eine Prozessoreinrichtung (121), welche ausgebildet ist, ein Gateway-Modul (121a) bereitzustellen, wobei das Gateway-Modul (121a) ausgebildet ist, erste Nachrichten von der zentralen Steuereinrichtung (110) gemäß dem ersten Kommunikationsprotokoll an das Batteriemanagementsystem (133a) gemäß dem zweiten Kommunikationsprotokoll weiterzuleiten und zweite Nachrichten von dem Batteriemanagementsystem (133a) gemäß dem zweiten Kommunikationsprotokoll an die zentrale Steuereinrichtung (110) gemäß dem ersten Kommunikationsprotokoll weiterzuleiten.

2. Aufladeeinrichtung (120a) nach Anspruch 1, wobei die ersten Nachrichten Daten und/oder Befehle zum Konfigurieren des Batteriemanagementsystems (133a) und/oder zum Durchführen eines Software-Updates des Batteriemanagementsystems (133a) umfassen.

3. Aufladeeinrichtung (120a) nach Anspruch 1 oder 2, wobei die zweiten Nachrichten Informationen über einen Status der aufladbaren Batterie (131a) und/oder einen Status des Batteriemanagementsystem (133a) umfassen.

4. Aufladeeinrichtung (120a) nach einem der vorstehenden Ansprüche, wobei das erste Kommunikationsprotokoll ein Bus-Kommunikationsprotokoll und/oder ein drahtloses Kommunikationsprotokoll umfasst.

5. Aufladeeinrichtung (120a) nach einem der vorstehenden Ansprüche, wobei das zweite Kommunikationsprotokoll ein Bus-Kommunikationsprotokoll umfasst.

6. Aufladeeinrichtung (120a) nach einem der vorstehenden Ansprüche, wobei das Gateway-Modul (121a) ferner ausgebildet ist, dritte Nachrichten von der zentralen Steuereinrichtung (110) gemäß dem ersten Kommunikationsprotokoll an eine elektronische Steuereinheit (135a) der elektrisch angetriebenen Vorrichtung (130a) gemäß dem zweiten Kommunikationsprotokoll weiterzuleiten und vierte Nachrichten von der elektronische Steuereinheit (135a) der elektrisch angetriebenen Vorrichtung (130a) gemäß dem zweiten Kommunikationsprotokoll an die zentrale Steuereinrichtung (110) gemäß dem ersten Kommunikationsprotokoll weiterzuleiten.

7. Aufladeeinrichtung (120a) nach Anspruch 6, wobei die dritten Nachrichten Daten und/oder Befehle zum Konfigurieren der elektronischen Steuereinheit (135a) der elektrisch angetriebenen Vorrichtung (130a) und/oder zum Durchführen eines Software-Updates der elektronischen Steuereinheit (135a) der elektrisch angetriebenen Vorrichtung (130a) umfassen.

8. Aufladeeinrichtung (120a) nach Anspruch 6 oder 7, wobei die vierten Nachrichten Informationen über einen Status der elektronischen Steuereinheit (135a) der elektrisch angetriebenen Vorrichtung (130a) umfassen.

9. Verfahren (300) zum Betreiben einer Aufladeeinrichtung (120a) zum Aufladen einer aufladbaren Batterie (131a) einer elektrisch angetriebenen Vorrichtung (130a) mit einem Batteriemanagementsystem (133a), wobei das Verfahren (300) umfasst:
Verbinden (301) einer ersten Schnittstelle (123) der Aufladeeinrichtung (120a) mit einer zentralen Steuereinrichtung (110), um auf der Grundlage eines ersten Kommunikationsprotokolls mit der zentralen Steuereinrichtung (110) zu kommunizieren;
Verbinden (303) einer zweiten Schnittstelle (125) der Aufladeeinrichtung (120a) mit der aufladbaren Batterie (131a), um auf der Grundlage eines zweiten Kommunikationsprotokolls mit dem Batteriemanagementsystem (133a) zu kommunizieren und die aufladbare Batterie (131a) aufzuladen; und
Bereitstellen (305) eines Gateway-Moduls (121a) durch eine Prozessoreinrichtung (121) der Aufladeeinrichtung (120a), wobei das Gateway-Modul (121a) ausgebildet ist, erste Nachrichten von der zentralen Steuereinrichtung (110) gemäß dem ersten Kommunikationsprotokoll an das Batteriemanagementsystem (133a) gemäß dem zweiten Kommunikationsprotokoll weiterzuleiten und zweite Nachrichten von dem Batteriemanagementsystem (133a) gemäß dem zweiten Kommunikationsprotokoll an die zentrale Steuereinrichtung (110) gemäß dem ersten Kommunikationsprotokoll weiterzuleiten.

10. System (100) zum Aufladen einer Vielzahl von aufladbaren Batterien (131a-b) einer Vielzahl von elektrisch angetriebenen Vorrichtungen (130a-d), wobei das System (100) umfasst:
eine zentrale Steuereinrichtung (110);
die Vielzahl von elektrisch angetriebenen Vorrichtungen (130a-d) mit der Vielzahl von aufladbaren Batterien (131a-b); und
eine Vielzahl von Aufladeeinrichtungen (120a-d) gemäß einem der vorstehenden Ansprüche zum Aufladen der Vielzahl von aufladbaren Batterien (131a-b).

11. System (100) nach Anspruch 10, wobei die Vielzahl von aufladbaren Batterien (131a-b) eine Vielzahl von aufladbaren Lithiumbatterien umfasst.

12. System (100) nach Anspruch 10 oder 11, wobei die Vielzahl von elektrisch angetriebenen Vorrichtungen (130a-d) eine Vielzahl von Flurförderzeugen und/oder mobilen Industrierobotern umfasst.

13. System (100) nach einem der Ansprüche 10 bis 12, wobei die Vielzahl von Aufladeeinrichtungen (120a-d) eine oder mehrere stationäre Aufladeeinrichtungen und/oder eine oder mehrere Onboard-Aufladeeinrichtungen umfasst.

14. System (100) nach einem der Ansprüche 10 bis 13, wobei die Vielzahl von Aufladeeinrichtungen (120a-d) ausgebildet sind, mit einem Stromnetz verbunden zu werden und mit Wechselstrom und/oder Gleichstrom betrieben zu werden.

15. System (100) nach einem der Ansprüche 10 bis 14, wobei die zentrale Steuereinrichtung (110) einen Cloud-Server umfasst.
